# EUROPEAN PATENT APPLICATION

(11) **EP 4 557 497 A1**
(43) Date of publication of application: **21.05.2025**
(21) Application number: 22959403.1
(22) Date of filing: 30.11.2022
(51) Int. Cl.: H01M 50/536, H01M 50/533, H01M 50/534

(54) **BATTERY CELL, BATTERY, ELECTRIC APPARATUS AND WELDING DEVICE**

(30) Priority: 21.09.2022 CN 202211148623
(71) Applicant: Jiangsu Contemporary Amperex Technology Limited, Changzhou, Jiangsu 213300 (CN); Contemporary Amperex Technology Co., Limited, Ningde, Fujian 352100 (CN)
(72) Inventor: JIN, Haizu, Changzhou, Jiangsu 213300 (CN); LIU, Huanji, Changzhou, Jiangsu 213300 (CN); HUANG, Jiantao, Changzhou, Jiangsu 213300 (CN); LING, Yangfang, Changzhou, Jiangsu 213300 (CN); SUN, Xin, Changzhou, Jiangsu 213300 (CN)
(74) Representative: Kraus & Lederer PartGmbB
(86) International application number: PCT/CN2022/135251
(87) International publication number: WO 2024/060403

(57) **Abstract**

The application discloses a battery cell, a battery, an electric device and a welding apparatus. The battery cell includes a housing, an electrode unit and an electrode lead member. The electrode unit is accommodated in the housing and includes a plurality of electrode tab sets arranged in a stacked way, and each of the electrode tab sets includes at least one electrode tab. The electrode lead member is arranged at the housing and includes a plurality of connection portions, each of the connection portions is welded to at least one of the electrode tab sets, and a plurality of electrode tab sets welded to the plurality of connection portions of the electrode lead member have a same polarity. By providing a plurality of connection portions on the electrode lead member, a layer amount of the electrode tabs welded to a single connection portion can be reduced, thereby reducing the difficulty of welding between the connection portion and the electrode tab, improving the connection strength between the connection portion and the respective electrode tab, reducing welding power and shortening welding duration, reducing a risk of electrode tab cracking and cold joints, and improving the current conveyance capacity and safety performance of the battery cell.

## Description

### CROSS REFERRENCE TO RELATED APPLICATION

The application claims the priority benefits of Chinese Patent Application No. 202211148623.4 filed on September 21, 2022 and entitled "BATTERY CELL, BATTERY, ELECTRIC DEVICE AND WELDING APPARATUS", the disclosure of which is incorporated herein by reference in its entirety.

### TECHNICAL FIELD

The application relates to the field of battery, and in particular to a battery cell, a battery, an electric device and a welding apparatus.

### BACKGROUND

Battery cells are widely used in electronic equipments such as mobile phones, laptop computers, electric bicycles, electric automobiles, electric aircrafts, electric ships, electric toy cars, electric toy ships, electric toy planes, and electric tools etc.

How to enhance the current conveyance capacity of the battery cells is an important research direction in the battery technology.

### SUMMARY

The application provides a battery cell, a battery, an electric device and a welding apparatus, which can improve the current conveyance capacity of battery cells.

In a first aspect, the application provides a battery cell including a housing, an electrode unit and an electrode lead member. The electrode unit is accommodated in the housing and includes a plurality of electrode tab sets arranged in a stacked way, and each of the electrode tab sets includes at least one electrode tab. The electrode lead member is arranged at the housing and includes a plurality of connection portions, each of the connection portions is welded to at least one of the electrode tab sets, and a plurality of electrode tab sets welded to the plurality of connection portions of the electrode lead member have a same polarity.

By providing a plurality of connection portions on the electrode lead member, a layer amount of the electrode tabs welded to a single connection portion can be reduced, thereby reducing the difficulty of welding between the connection portion and the electrode tab, improving the connection strength between the connection portion and the respective electrode tab, reducing welding power and shortening welding duration, reducing a risk of electrode tab cracking and cold joints, and improving the current conveyance capacity and safety performance of the battery cell.

In some embodiments, an amount of the electrode tab sets is the same as an amount of the connection portions, and each of the connection portions is welded to one of the electrode tab sets respectively.

The plurality of electrode tab sets and the plurality of connection portions are arranged in one-to-one correspondence, which can make the stacking of the connection portions and the electrode tab sets ordered, reduce the difficulty of grouping the electrode tabs, and improve welding efficiency.

In some embodiments, the plurality of connection portions include a first connection portion and a second connection portion, and the plurality of electrode tab sets include a first electrode tab set and a second electrode tab set. At least a part of the first electrode tab set is located between the first connection portion and the second connection portion and is welded to the first connection portion, and at least a part of the second electrode tab set is located between the first electrode tab set and the second connection portion and is welded to the second connection portion.

The first connection portion and the second connection portion can protect at least a part of the first electrode tab set and at least a part of the second electrode tab set from two sides, so as to reduce a risk of damaging the electrode tabs.

In some embodiments, the plurality of connection portions include a first connection portion and a second connection portion, and the plurality of electrode tab sets include a first electrode tab set and a second electrode tab set. At least a part of the first electrode tab set is located on a side of the first connection portion away from the second connection portion and is welded to the first connection portion, and at least a part of the second electrode tab set is located on a side of the second connection portion away from the first connection portion and is welded to the second connection portion.

In some embodiments, each of the connection portions is welded to the respective electrode tab set and form a welding portion. The battery cell further includes a separator assembly, and the separator assembly is used to separate adjacent welding portions.

The separator assembly can separate the adjacent welding portions so as to reduce a risk of friction occurring between the welding portions, reduce metal particles, reduce a risk of short circuit and improve safety.

In some embodiments, the separator assembly includes a plurality of separator layers. The plurality of connection portions are arranged in a stacked way; in a stacked direction of the plurality of connection portions, a welding portion includes two welding surfaces arranged opposite to each other; each of the welding surfaces is attached with the separator layer.

The separator layer is attached to the welding surface to cover at least a part of the metal particles on the welding surface, thereby reducing a risk of metal particles falling into the electrode unit and improving safety.

In some embodiments, the separator layer completely covers the welding surface so as to seal the metal particles between the welding surface and the separator layer, reduce the risk of metal particles falling into the electrode unit and improve safety.

In some embodiments, the separator assembly includes a separator layer. Two separator layers are provided between two adjacent welding portions, and the two separator layers are attached to the two welding portions respectively.

The two separator layers can not only fix residual metal particles on the two welding portions, but also form a double-layer protective structure between the two welding portions, reducing the risk of friction between the two welding portions.

In some embodiments, the separator assembly includes a separator layer. One separator layer is provided between two adjacent welding portions, and two surfaces of the separator layer are attached to the two welding portions respectively.

The separator layer can not only fix residual metal particles on the two welding portions, but also connect the two welding portions, so as to reduce a relative displacement of the two welding portions and reduce the risk of friction between the two welding portions. The separator layer connects the plurality of electrode tab sets and the plurality of connection portion together, thereby improving the overall strength of the plurality of electrode tab sets and reducing a risk of the electrode tab breaking.

In some embodiments, a thermal conductivity of the electrode tab is less than 50W/(m•°C).

The thermal conductivity of the electrode tab is relatively low, which can slow down the rate of heat emission from the electrode tab, allowing the battery cell to exert more capacity in a low-temperature environment.

In some embodiments, a melting point of the electrode tab is greater than or equal to 1000°C.

By limiting the melting point of the electrode tab to be greater than or equal to 1000°C, it is possible to reduce a risk of the electrode tab being fused, improve the current conveyance capacity, extend the cycle life of the battery cell, and reduce a safety risk.

In some embodiments, a hardness of the electrode tab is greater than 80HV.

By limiting the hardness of the electrode tab to be greater than 80HV, it is possible to effectively reduce a risk of the electrode tab being damaged by impurity, reduce the possibility of the electrode tab breaking, extend the cycle life of the battery cell, and reduce a safety risk.

In some embodiments, a tensile strength of the electrode tab is greater than 500Mpa.

The tensile strength of the electrode tab is limited to be greater than 500MPa so as to reduce a risk of the electrode tab being pulled apart in vibration of the battery cell, extend the cycle life of the battery cell, and reduce a safety risk.

In some embodiments, the electrode tab is a copper foil, an aluminum foil, a steel foil, a titanium foil, a nickel foil, or a nickel iron alloy foil.

The copper foil, the aluminum foil, the steel foil, the titanium foil, the nickel foil, and the nickel iron alloy foil have high strength and hardness. The electrode tabs made of these materials are not easily broken, thereby improving the current conveyance capacity of the battery cell, extending the cycle life of the battery cell, and reducing a safety risk.

In some embodiments, the electrode lead member further includes a current collection portion connected to the plurality of connection portions. The current collection portion can collect the currents from the plurality of connection portions to facilitate leading out of current.

In some embodiments, the current collection portion and the plurality of connection portions are formed integrally.

Integrally forming can reduce the resistance at the connection between the current collection portion and the connection portion, reduce heat generation, and improve the current conveyance capacity of the electrode lead member.

In some embodiments, the current collection portion passes through the housing.

The current collection portion passes through the housing and extends to the outside of the housing, so as to facilitate an electrical connection to an external circuit and enable charging and discharging of the electrode unit.

In some embodiments, the electrode lead member further includes an electrode terminal arranged on the housing, and the electrode terminal is exposed to an outside of the housing. The current collection portion is connected to the electrode terminal.

The electrode terminal is exposed to the outside of the housing to facilitate connection to an external component, so that the electrode unit is electrically connected to the external circuit through the current collection portion and the connection portion to enable charging and discharging of the electrode unit.

In some embodiments, the electrode unit includes a plurality of electrode assemblies, and each of the electrode assemblies includes at least one of the electrode tab sets. By providing the plurality of electrode assemblies in the battery cell, the capacity of the battery cell can be increased.

In some embodiments, the electrode unit includes at least one electrode assembly, and one electrode assembly includes at least two of the electrode tab sets arranged in a stacked way and having a same polarity.

In a second aspect, the embodiments of the application provide a battery including a plurality of battery cells provided by any embodiment of the first aspect.

In a third aspect, the embodiments of the application provide an electric device including the battery provided by any embodiment of the first aspect. The battery cell is used to provide electrical energy.

In a fourth aspect, the embodiments of the application provide a welding apparatus for welding a plurality of electrode tab sets of an electrode unit to a plurality of connection portions of an electrode lead member, and a plurality of electrode tab sets welded to the plurality of connection portions of the electrode lead member have a same polarity. The welding apparatus includes a plurality of welding assemblies, and each of the welding assemblies is used to weld the connection portion to at least one of the electrode tab sets.

By providing a plurality of welding assemblies, a layer amount of the electrode tabs to be welded by each welding assembly can be reduced, thereby reducing the difficulty of welding between the connection portion and the electrode tab, improving the connection strength between the connection portion and the respective electrode tab, reducing welding power and shortening welding duration, reducing a risk of electrode tab cracking and cold joints, and improving the current conveyance capacity and safety performance of the battery cell. The plurality of welding assemblies may weld synchronously to improve welding efficiency.

In some embodiments, each of the welding assemblies includes a first welding component and a second welding component arranged opposite to each other. The welding apparatus further includes at least three mounting plates arranged in sequence at intervals, and any two adjacent mounting plates are configured to be capable of approaching or moving away from each other; In any two adjacent mounting plates, a side of one mounting plate facing towards the other mounting plate is fixed with the first welding component, and a side of the other mounting plate facing towards the one mounting plate is fixed with the second welding component.

By providing a plurality of mounting plates, the relative movement of the first and second welding components of the plurality of mounting plates can be achieved simultaneously, thereby synchronously welding a plurality of connection portions and a plurality of electrode tab sets, improving welding efficiency.

### BRIEF DESCRIPTION OF THE DRAWINGS

The features, advantages and technical effects of the exemplary embodiments of the application will be described below with reference to the drawings.
Fig. 1 is a schematic structural view of a vehicle provided by some embodiments of the application;
Fig. 2 is a schematic explosive view of a battery provided by some embodiments of the application;
Fig. 3 is a schematic structural view of the battery module as shown in Fig. 2;
Fig. 4 is a schematic structural perspective view of a battery cell provided by some embodiments of the application;
Fig. 5 is a schematic sectional view of a battery cell provided by some embodiments of the application;
Fig. 6 is a schematic enlarged view at the circle A of Fig. 5;
Fig. 7 is a schematic view of an electrode unit and an electrode lead member of a battery cell provided by some embodiments of the application;
Fig. 8 is a schematic structural view of an electrode lead member of a battery cell provided by some embodiments of the application;
Fig. 9 is a schematic structural view of a battery cell provided by some further embodiments of the application, in which the housing is omitted;
Fig. 10 is a schematic structural view of a battery cell provided by some further embodiments of the application, in which the housing is omitted;
Fig. 11 is a schematic structural view of a battery cell provided by some further embodiments of the application, in which the housing is omitted;
Fig. 12 is a schematic explosive view of a battery cell provided by some further embodiments of the application;
Fig. 13 is a schematic enlarged view at the circle B of Fig. 12;
Fig. 14 is a schematic structural view of a welding apparatus provided by some embodiments of the application.

The views are not necessarily plotted in actual proportion in the drawings.

### DETAILED DESCRIPTION

In order to make the purpose, the solution and the advantages of the embodiments of the application clearer, the technical solution of the embodiments of the application will be described clearly below with reference to the accompanying drawings. It is obvious that the embodiments as described are only a part of the embodiments of the application, rather than all of the embodiments. Based on the embodiments of the application, all other embodiments obtained by a person of ordinary skill in the art without creative efforts shall fall within the protection scope of the application.

Unless otherwise defined, all the technical and scientific terms used in the application have the same meanings as commonly understood by a person skilled in the art of the application. The terms used in the description of this application is for the purpose of describing specific embodiments only and is not intended to limit the application. The terms "comprise", "have" and any variations thereof in the description and claims of the application and the brief description of the drawings above are intended to cover non-exclusive inclusions. The terms "first", "second" and the like in the description and claims of the application or in the aforesaid drawings are used to distinguish different objects and are not used to describe a particular order or primary-secondary relationship.

Reference to "embodiment" in the application means that the specific features, structures, or characteristics described in connection with the embodiment may be included in at least one embodiment of the application. The presence of this phrase at various locations in the description does not necessarily refer to the same embodiment, nor is it a separate or alternative embodiment that is mutually exclusive from other embodiments.

In the description of the application, it is noted that, except as otherwise stipulated or limited explicitly, the terms "mount", "link", "connect", "attach" shall be interpreted expansively, for example, it may be fixed connection, removable connection or integral connection; may be direct connection or indirect connection via an intermediate medium, or may be communication inside two elements. For a person of ordinary skill in the art, the specific meaning of the above terms in the application can be interpreted depending on the specific situation.

In the application, the term "and/or" is merely to describe an association relationship of associated objects, meaning that there may be three relationship, for example, A and/or B may mean three cases that A exists alone, A and B exist simultaneously, and B exists alone. In addition, the character "/" in the application generally indicates that the related objects before and after have an "or" relationship.

In the embodiments of the application, the same reference numerals denote the same components, and in the different embodiments, detailed description of the same components is omitted for brevity. It should be understood that the thickness, length, width, and the like of the various components, and the overall thickness, length, width, and the like of the integrated device in the embodiments of the application shown in the drawings are merely illustrative and should not be construed as limiting of the application.

Reference to "a plurality of" in the application means two or more (including two).

In the application, the term "parallel" includes not only the case of being absolutely parallel, but also the case of being approximately parallel as conventionally understood in engineering; at the same time, "vertical" also includes not only the case of being absolutely vertical, but also the case of being approximately vertical as conventionally understood in engineering.

In the application, the battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited by the embodiments of the application. The battery cell may be in the form of a cylinder, a flat body, a cuboid, or other shape, which is not limited by the embodiments of the application.

The battery mentioned in the embodiments of the application refers to a single physical module including one or more battery cells to provide higher voltage and capacity. The battery may generally further include a case for encapsulating one or more battery cells. The case can prevent liquid or other foreign matter from affecting the charging or discharging of the battery cell.

The battery cell includes an electrode assembly and electrolyte solution, and the electrode includes a positive electrode sheet, a negative electrode sheet, and a separator membrane. The battery cell operates mainly by moving metal ions between the positive and negative electrode sheets. The positive electrode sheet includes a positive electrode current collector and a positive electrode active material layer coated on a surface of the positive electrode current collector. The positive electrode current collector includes a positive electrode current collecting portion and a positive electrode tab. The positive electrode current collecting portion is coated with the positive electrode active material layer, and the positive electrode tab is not coated with the positive electrode active material layer. Taking a lithium ion battery as an example, the material of the positive electrode current collector may be aluminum, the positive electrode active material layer includes a positive electrode active material, and the positive electrode active material may be lithium cobaltate, lithium iron phosphate, lithium ternary or lithium manganate, or the like. The negative electrode sheet includes a negative electrode current collector and a negative electrode active material layer coated on a surface of the negative electrode current collector. The negative electrode current collector includes a negative electrode current collecting portion and a negative electrode tab. The negative electrode current collecting portion is coated with the negative electrode active material layer, and the negative electrode tab is not coated with the negative electrode active material layer. The material of the negative electrode current collector may be copper, the negative electrode active material layer includes a negative electrode active material, and the negative electrode active material may be carbon, silicon, or the like. In order to ensure that a large current does not cause fusing, there are a plurality of positive electrode tabs stacked together, and there are a plurality of negative electrode tabs stacked together. The material of the separator membrane may be PP (polypropylene) or PE (polyethylene) or the like. In addition, the electrode assembly may be of a wound structure or a laminated structure, which is not limited by the embodiments of the application.

The battery cell is usually provided with an electrode lead member, and the electrode lead member is used for electrical connection to the electrode assembly. The electrode assembly can be electrically connected to an external circuit through the electrode lead member so as to achieve charging and discharging. In the related technologies, in order to reduce resistance and improve connection strength, the electrode tab of the electrode assembly is usually connected to the electrode lead member in a way of welding.

In order to improve the current conveyance capacity of the battery cell and reduce the heat generation of the electrode tab, the inventor attempted to increase the layer amount of the electrode tab. However, the inventor has found that as the layer amount of the electrode tab increases, the welding power and the welding pressure holding duration will also increase correspondingly; if the welding power and the welding pressure holding duration are increased, the electrode tab is prone to cracks, thereby resulting in an insufficient current conveyance capacity of the battery cell; when a vibration occurs in the battery cell, the cracked electrode tab may break and be inserted backwards into the electrode assembly, thereby resulting in a short circuit and posing a safety risk. If the welding power and the welding pressure holding duration are not increased, it may cause a cold joint due to the large layer amount of electrode tab, resulting in an insufficient connection strength between the electrode tab and the electrode lead member; when the battery cell vibrates, the electrode tab may detach from the electrode assembly and be inserted backwards into the electrode assembly, thereby resulting in a short circuit and posing a safety risk.

In view of this, the embodiments of the application provide a technical solution, in which a battery cell includes a housing, an electrode unit and an electrode lead member. The electrode unit is accommodated in the housing and includes a plurality of electrode tab sets arranged in a stacked way, and each of the electrode tab sets includes at least one electrode tab. The electrode lead member is arranged at the housing and includes a plurality of connection portions, each of the connection portions is welded to at least one electrode tab sets.

By providing a plurality of connection portions on the electrode lead member, a layer amount of the electrode tabs welded to a single connection portion can be reduced, thereby reducing the difficulty of welding between the connection portion and the electrode tab, improving the connection strength between the connection portion and the respective electrode tab, reducing welding power and shortening welding duration, reducing a risk of electrode tab cracking and cold joints, and improving the current conveyance capacity and safety performance of the battery cell.

The electrode sheet described in the embodiments of the application is applicable to battery cells, batteries and electric devices employing batteries.

The electric device may be a vehicle, a mobile phone, a portable device, a notebook computer, a ship, a spacecraft, an electric toy and a power tool, etc. The vehicle may be a fuel, gas or new energy vehicle. The new energy vehicle may be a pure electric vehicle, a hybrid vehicle, an extended-range vehicle, etc. The spacecraft includes an airplane, a rocket, an aerospaceplane, a spaceship, etc. The electric toy includes a fixed or movable electric toy, for example, a game machine, an electric car toy, an electric ship toy, and an electric airplane toy, etc. The power tool includes a metal cutting power tool, a grinding power tool, an assembly power tool, and a railway power tool, for example, an electric drill, an electric grinder, an electric wrench, an electric screwdriver, an electric hammer, an impact electric drill, a concrete vibrator and an electric planer, etc. The embodiments of the application have no particular limitation to the above electric device.

For ease of description, the following embodiments take a vehicle as an example of the electric device for explanation.

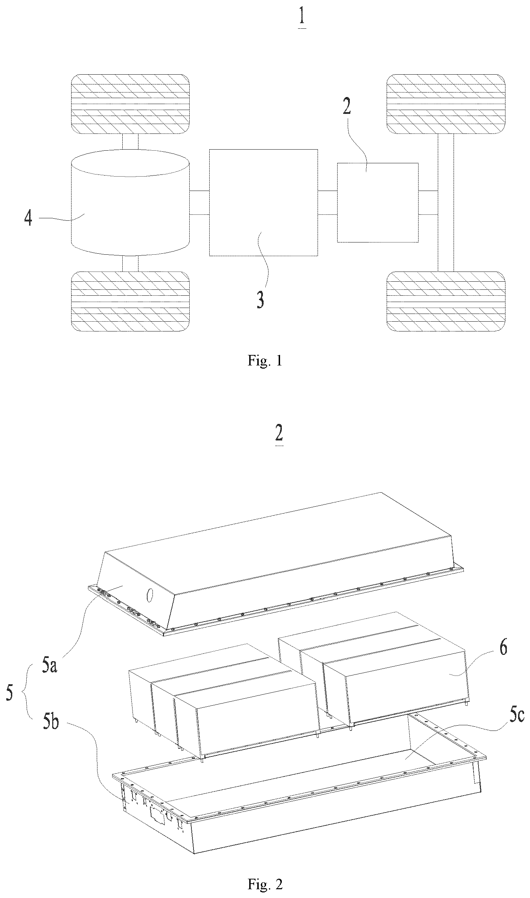

Fig. 1 is a schematic structural view of a vehicle provided by some embodiments of the application.

As shown in Fig. 1, a battery 2 is provided inside the vehicle 1, and the battery 2 may be disposed at a bottom or a head or a rear of the vehicle 1. The battery 2 may be used for powering the vehicle 1. For example, the battery 2 may serve as an operational power source for the vehicle 1.

The vehicle 1 may also include a controller 3 and a motor 4. The controller 3 is used for controlling the battery 2 to power the motor 4, for example, for operational power requirements during start-up, navigation and traveling of the vehicle 1.

In some embodiments of the application, the battery 2 may serve not only as an operational power source for the vehicle 1, but also as a drive power source for the vehicle 1 to provide a drive power for the vehicle 1 instead of or partially instead of fuel or natural gas.

Fig. 2 is a schematic explosive view of a battery provided by some embodiments of the application.

As shown in Fig. 2, the battery 2 includes a case 5 and a battery cell ( not shown in Fig. 2), and the battery cell is accommodated in the case 5.

The case 5 is used for accommodating the battery cell, and the case 5 may have various structures. In some embodiments, the case 5 may include a first case portion 5a and a second case portion 5b capped by each other. The first case portion 5a and the second case portion 5b together define an accommodation space 5c for accommodating the battery cell. The second case portion 5b may be of a hollow structure with one end open, the first case portion 5a is of a plate-like structure, and the first case portion 5a is capped to the open side of the second case portion 5b to form the case 5 with the accommodation space 5c. Also, each of the first case portion 5a and the second case portion 5b may be of a hollow structure with one side open, and the open side of the first case portion 5a is capped to the open side of the second case portion 5b to form the case 5 with the accommodation space 5c. Of course, the first case portion 5a and the second case portion 5b may have various shapes, such as a cylinder, a cuboid and the like.

In order to increase the seal property after the first case portion 5a and the second case portion 5b are connected, a seal member, such as seal glue or a seal ring, may be provided between the first case portion 5a and the second case portion 5b.

If the first case portion 5a is capped on the top of the second case portion 5b, the first case portion 5a may also be referred to as an upper case cover, and the second case portion 5b may also be referred to as a lower case body.

In the battery 2, the amount of battery cell may be single or plural. If there are a plurality of battery cells, the plurality of battery cells may be connected in series or in parallel or in a mixed manner, wherein the mixed manner means that the plurality of battery cells are connected both in series and in parallel. The plurality of battery cells may be directly connected together in series or in parallel or in the mixed manner, and the entirety constituted by the plurality of battery cells is accommodated in the case 5. Of course, the plurality of battery cells may also be connected in series or in parallel or in the mixed manner to form battery modules 6 at first, and then a plurality of battery modules 6 may be connected in series or in parallel or in the mixed manner to form an entirety and be accommodated in the case 5.

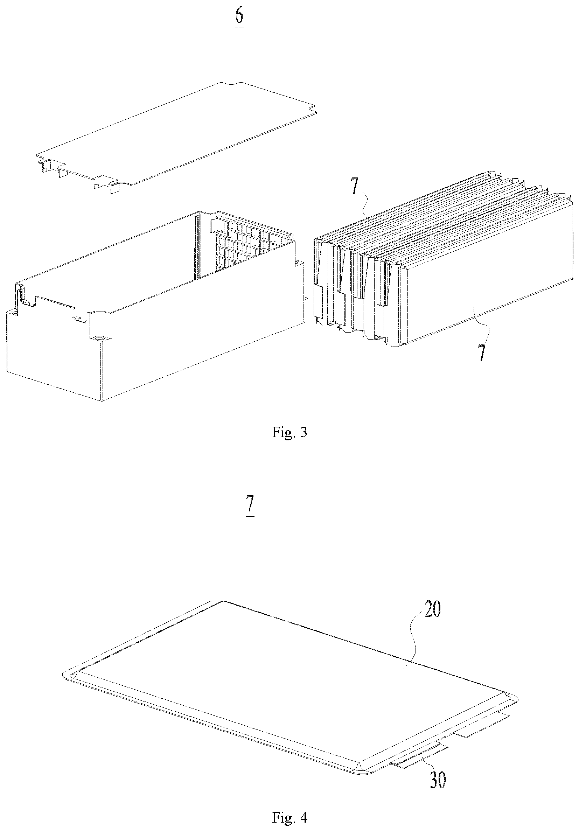

Fig. 3 is a schematic structural view of the battery module as shown in Fig. 2.

As shown in Fig. 3, in some embodiments, there are a plurality of battery cells 7, and the plurality of battery cells 7 are connected in series or in parallel or in the mixed manner to form battery modules 6 at first. Then a plurality of battery modules 6 are connected in series or in parallel or in the mixed manner to form an entirety and are accommodated in the case.

The plurality of battery cells 7 in a battery module 6 may be electrically connected by a bus member to achieve a parallel or series or mixed connection of the plurality of battery cells 7 in the battery module 6.

The battery cell 7 may be a cylindrical battery cell, a rectangular battery cell or a battery cell of other shapes.

The battery cell 7 may be a hard shell battery cell or a soft pack battery cell.

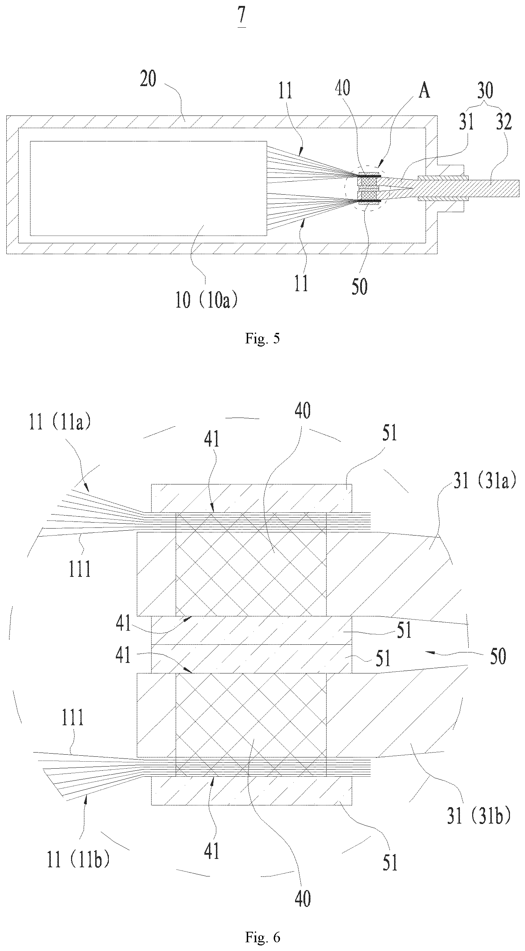

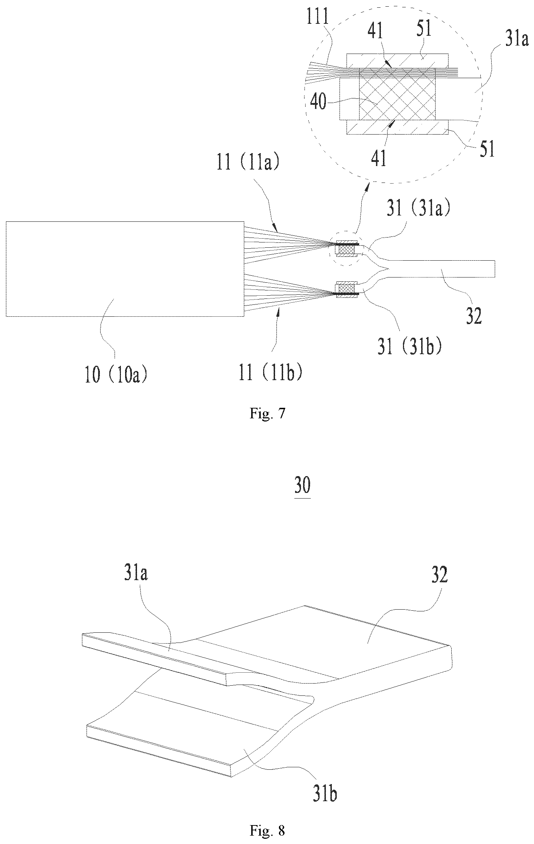

Fig. 4 is a schematic structural perspective view of a battery cell provided by some embodiments of the application; Fig. 5 is a schematic sectional view of a battery cell provided by some embodiments of the application; Fig. 6 is a schematic enlarged view at the circle A of Fig. 5; Fig. 7 is a schematic view of an electrode unit and an electrode lead member of a battery cell provided by some embodiments of the application; Fig. 8 is a schematic structural view of an electrode lead member of a battery cell provided by some embodiments of the application.

As shown in Figs. 4-8, the battery cell 7 provided by some embodiments of the application includes a housing 20, an electrode unit 10 and an electrode lead member 30. The electrode unit 10 is accommodated in the housing 20 and includes a plurality of electrode tab sets 11 arranged in a stacked way, and each of the electrode tab sets 11 includes at least one electrode tab 111. The electrode lead member 30 is arranged at the housing 20 and includes a plurality of connection portions 31, and each connection portions 31 is welded to at least one electrode tab sets 11. The plurality of electrode tab sets 11 welded to the plurality of connection portions 31 of the electrode lead member 30 have a same polarity.

The housing 20 is of a hollow structure in which an accommodation cavity for accommodating the electrode unit 10 and the electrolyte solution is formed. The shape of the housing 20 may be determined according to a specific shape of the electrode unit 10. For example, if the electrode unit 10 is of a cylindrical structure, the housing may be selected to be a cylindrical housing; if the electrode unit 10 is of a rectangular structure, the housing may be selected to be a rectangular housing.

The housing 20 may be of various materials, such as copper, iron, aluminum, stainless steel, aluminum alloy, plastic and other materials, on which the embodiments of the application make no specific limitations. For example, the housing 20 may be made of an aluminum-plastic packaging film or a steel-plastic packaging film.

The electrode unit 10 includes one or more electrode assemblies 10a.

The electrode assembly 10a includes a positive electrode sheet and a negative electrode sheet. For example, the electrode assembly 10a generates electrical energy through oxidation and reduction reactions during the insertion/extraction of ions in the positive and negative electrode sheets. Optionally, the electrode assembly 10a further includes a separator membrane used to separate the positive electrode sheet from the negative electrode sheet in an insulated way.

In some examples, each of the positive electrode sheet, the negative electrode sheet and the separator membrane is of a strip structure, and the positive electrode sheet, the negative electrode sheet and the separator membrane are wound around a central axis as an entirety and form a wound structure. The wound structure may be a cylindrical, flat, or other shaped structure. In some other examples, the electrode assembly 10a may also be of a stacked structure formed by arranging the positive electrode sheet, the separator membrane and the negative electrode sheet in a stacked way.

The positive electrode sheet may include one or more positive electrode tab. For example, the positive electrode tab is a portion of the positive electrode sheet coated with no active material layer. The negative electrode sheet may include one or more negative electrode tab. For example, the negative electrode tab is a portion of the negative electrode sheet coated with no active material layer.

The electrode assembly 10a includes a plurality of positive electrode tabs arranged in a stacked way and a plurality of stacked negative electrode tabs arranged in a stacked way.

In some examples, the electrode unit 10 includes one electrode assembly 10a. All the positive electrode tabs of the electrode assembly 10a are divided into at least two positive electrode tab sets 11, and each positive electrode tab set 11 includes at least one positive electrode tab; all the negative electrode tabs of the electrode assembly 10a are divided into at least two negative electrode tab sets 11, and each negative electrode tab set 11 includes at least one negative electrode tab.

In some other examples, the electrode unit 10 includes a plurality of electrode assemblies 10a. The positive electrode tabs of all the electrode assemblies 10a are divided into at least two positive electrode tab sets 11, and each positive electrode tab set 11 includes at least one positive electrode tab; the negative electrode tabs of all the electrode assemblies 10a are divided into at least two negative electrode tab sets, and each negative electrode tab set 11 includes at least one negative electrode tab.

The electrode cell 7 is provided with at least one electrode lead member 30. The electrode lead member 30 is used to be connected to the electrode tabs 111 having a same polarity.

In some examples, the amount of the electrode lead member 30 is one. The connection portion 31 of the electrode lead member 30 is used to be welded to the positive electrode tab set 11, or the connection portion 31 of the electrode lead member 30 is used to be welded to the negative electrode tab set 11.

In some other examples, the amount of the electrode lead members 30 is two. The connection portion 31 of one electrode lead member 30 is used to be welded to the positive electrode tab set 11, and the connection portion 31 of the other electrode lead member 30 is used to be welded to the negative electrode tab set 11.

The electrode tab set 11 may include one electrode tab 111 or a plurality of electrode tabs 111 arranged in a stacked way. For any two adjacent electrode tab sets 11, the amount of the electrode tabs 111 in the two electrode tab sets 11 may be the same or different.

One connection portion 31 may be welded to only one electrode tab set 11, or may also be welded to a plurality of electrode tab sets 11 simultaneously.

In the embodiments of the application, by providing a plurality of connection portions 31 on the electrode lead member 30, a layer amount of the electrode tabs 111 welded to a single connection portion 31 can be reduced, thereby reducing the difficulty of welding between the connection portion 31 and the electrode tab 111, improving the connection strength between the connection portion 31 and the respective electrode tab 111, reducing welding power and shortening welding duration, reducing a risk of electrode tab 111 cracking and cold joints, and improving the current conveyance capacity and safety performance of the battery cell 7.

The welding process of the plurality of connection portions 31 is independent of each other; that is, the welding process between a connection portion 31 and the respective electrode tab set 11 is not affected by other connection portions 31 and other electrode tab sets 11. The plurality of connection portions 31 will not be connected by welding.

In some embodiments, the connection portion 31 and the electrode tab set 11 are connected by ultrasonic welding or laser welding.

In some embodiments, each electrode tab set 11 includes at least two electrode tabs 111. The embodiments can reduce the total amount of electrode tab sets 11 and the total amount of connection portions 31, thereby reducing the times of welding and improving welding efficiency.

In some embodiments, the amount of the electrode tabs 111 in the electrode tab set 11 is 2-20. Optionally, the amount of the electrode tabs 111 in the electrode tab set 11 is 4-10.

In some embodiments, the amounts of the electrode tabs 111 in the plurality of electrode tab sets 11 are the same.

In some embodiments, an amount of the electrode tab sets 11 is the same as an amount of the connection portions 31, and each of the connection portions 31 is welded to one electrode tab set 11 respectively.

In the embodiments, the plurality of electrode tab sets 11 and the plurality of connection portions 31 are arranged in one-to-one correspondence, which can make the stacking of the connection portions 31 and the electrode tab sets 11 ordered, reduce the difficulty of grouping the electrode tabs 11, and improve welding efficiency.

In some embodiments, a thermal conductivity of the electrode tab 111 is less than 50W/(m•°C). The thermal conductivity of the electrode tab 111 is relatively low, which can slow down the rate of heat emission from the electrode tab 111, allowing the battery cell to exert more capacity in a low-temperature environment.

In some embodiments, a melting point of the electrode tab 111 is greater than or equal to 1000°C. Optionally, the melting point of the electrode tab 111 is 1000°C-1500°C.

When the current passes through the electrode tab 111, the electrode tab 111 generates heat and heats up. If the melting point of the electrode tab 111 is relatively low, the electrode tab 111 may be fused during charging and discharging, causing the electrode tab 111 to fail and causing safety issues.

After in-depth research and extensive experiments, the inventor has found that by limiting the melting point of the electrode tab 111 to be greater than or equal to 1000°C, it is possible to reduce a risk of the electrode tab 111 being fused, improve the current conveyance capacity, extend the cycle life of the battery cell 7, and reduce a safety risk.

In some embodiments, a hardness of the electrode tab 111 is greater than 80HV (Vickers hardness).

During the production process of the battery cell 7, the electrode assembly 10a is required to go through a plurality of processes; impurities generated during the production process (such as the particles generated during welding) may remain on the electrode tab 111. If the hardness of the electrode tab 111 is insufficient, the electrode tab 111 may produce defects such as indentation and micropores under the squeezing of impurities; when the battery cell 7 vibrates, the defects on the electrode tab 111 may worsen under a tension, posing a risk of the electrode tab 111 breaking.

After in-depth research and extensive experiments, the inventor has found that by limiting the hardness of the electrode tab 111 to be greater than 80HV, it is possible to effectively reduce a risk of the electrode tab 111 being damaged by impurity, reduce the possibility of the electrode tab 111 breaking, extend the cycle life of the battery cell 7, and reduce a safety risk.

In some embodiments, a tensile strength of the electrode tab 111 is greater than 500Mpa.

The tensile strength may also be referred to as a tensile resistance strength. The tensile resistance strength represents a resistance of a material to the maximum uniform plastic deformation. Before bearing the maximum tensile stress, the deformation of the tensile specimen is uniform and consistent, but after exceeding it, the material begins to exhibit necking, resulting in a concentrated deformation. For a brittle material with no (or very small) uniform plastic deformation, it reflects the break resistance of the material. For a metallic material, the tensile resistance strength is a critical value at which a metal transitions from a uniform plastic deformation to a localized concentrated plastic deformation, and is also the maximum load-bearing capacity of the metal under a static tensile condition.

When the battery cell 7 vibrates due to an external impact, the electrode assembly 10a may shake up and down inside the housing 20, making the electrode tab 111 under a tension. If the tensile strength of the electrode tab 111 is insufficient, there may be a risk of the electrode tab 111 breaking.

After in-depth research and extensive experiments, the inventor has found that by limiting the tensile strength of the electrode tab 111 to be greater than 500MPa, a risk of the electrode tab 111 being pulled apart in vibration of the battery cell 7 can be reduced, so as to extend the cycle life of the battery cell 7 and reduce a safety risk.

The electrode tab 111 of the embodiments of the application has high strength and high hardness, which can effectively reduce the wrinkling of the electrode tab 111, reduce the collapse of the electrode tab 111, and reduce a risk of electrode tab 111 cracking.

In some embodiments, the electrode tab 111 is a copper foil, an aluminum foil, a steel foil, a titanium foil, a nickel foil, or a nickel iron alloy foil. The copper foil, the aluminum foil, the steel foil, the titanium foil, the nickel foil, and the nickel iron alloy foil have high strength and hardness. The electrode tabs 111 made of these materials are not easily broken, thereby improving the current conveyance capacity of the battery cell 7, extending the cycle life of the battery cell 7, and reducing a safety risk.

Optionally, the electrode tab 111 is made of a stainless steel foil.

In some embodiments, the electrode tab 111 may also be made of a specially treated high-strength copper foil or high-strength aluminum foil.

In some embodiments, the connection portion 31 and the electrode tab 111 may employ the same material or different materials. Optionally, the connection portion 31 and the electrode tab 111 may employ the same material so as to reduce welding difficulty and improve welding strength.

In some embodiments, the electrode lead member 30 further includes a current collection portion 32 connected to the plurality of connection portions 31.

The current collection portion 32 and the connection portion 31 may be an integrally formed structure or may also be two independently formed components. In some examples, the current collection portion 32 and the connection portion 31 are formed integrally; in some other examples, a plurality of connection portions 31 are connected to the current collection portion 32 by welding, bonding, clamping, or other means; in some yet other examples, a part of the connection portions 31 and the collecting portion 32 are formed integrally, while the remaining of the connection portions 31 are connected to the current collection portion 32 by welding, bonding, clamping, or other means.

The current collection portion 32 can collect the currents from the plurality of connection portions 31 to facilitate leading out of current.

In some embodiments, the current collection portion 32 and the plurality of connection portions 31 are formed integrally. Integrally forming can reduce the resistance at the connection between the current collection portion 32 and the connection portion 31, reduce heat generation, and improve the current conveyance capacity of the electrode lead member 30.

In some embodiments, the plurality of connection portions 31 are connected to a same end of the current collection portion 32. Before welding the electrode tab set 11 and the connection portions 31, the plurality of connection portions 31 may be bent relative to the current collection portion 32 and form a forked structure so as to form a gap between adjacent connection portions 31. The welding apparatus can extend into the gap to weld the connection portion 31 and the respective electrode tab set 11.

After welding is completed, the plurality of connection portions 31 and the plurality of electrode tab sets 11 may be gathered towards the center so as to reduce the space occupied by the plurality of connection portions 31 and the plurality of electrode tab sets 11 and improve space utilization.

In some embodiments, the current collection portion 32 passes through the housing 20. One end of the current collection portion 32 is accommodated in the housing 20 and connected to the plurality of connection portions 31, while the other end of the current collection portion 32 is located outside the housing 20.

The current collection portion 32 passes through the housing 20 and extends to the outside of the housing 20, so as to facilitate an electrical connection to an external circuit and enable charging and discharging of the electrode unit 10.

Optionally, the current collection portion 32 is used to be electrically connected to a bus bar member to achieve a parallel or series connection between battery cells 7.

In some embodiments, each of the connection portions 31 is welded to the respective electrode tab set 11 and form a welding portion 40. The battery cell 7 further includes a separator assembly 50, and the separator assembly 50 is used to separate adjacent welding portions 40.

For example, during welding, a part of the connection portion 31 and a part of each electrode tab 111 of the electrode tab set 11 melt and form a molten pool, and the molten pool forms a welding portion 40 after solidification. The welding portion 40 fixedly connects the connection portion 31 and the respective electrode tab set 11.

The separator assembly 50 may separate a part of the welding portions 40, or may also separate all of the welding portions 40. Optionally, the separator assembly 50 separates any two adjacent welding portions 40.

The surface of the welding portion 40 is uneven. If two welding portions 40 come into contact with each other, during the vibration of the battery cell 7, the two welding portions 40 may have friction and form metal particles, and the metal particles may fall into the electrode unit 10 and cause a risk of short circuit.

The separator assembly 50 of the embodiments of the application can separate the adjacent welding portions 40 so as to reduce a risk of friction occurring between the welding portions 40, reduce metal particles, reduce a risk of short circuit and improve safety.

In some embodiments, the separator assembly 50 includes a plurality of separator layers 51. The plurality of connection portions 31 are arranged in a stacked way. In a stacked direction of the plurality of connection portions 31, a welding portion 40 includes two welding surfaces 41 arranged opposite to each other. Each welding surface 41 is attached with a separator layer 51.

Attaching may refer to fitting and connecting.

The separator layer 51 may completely cover the welding surface 41 or may also cover only a part of the welding surface 41.

After welding is completed, metal particles will remain on the welding surface 41. When the battery cell 7 vibrates, the metal particles may fall into the electrode unit 10, thereby causing a risk of short circuit.

In the embodiments of the application, the separator layer 51 is attached to the welding surface 41 to cover at least a part of the metal particles on the welding surface 41, thereby reducing a risk of metal particles falling into the electrode unit 10 and improving safety.

In some embodiments, the separator layer 51 is bonded to the welding surface 41.

In some embodiments, the separator layer 51 is bonded to an unwelded region (which may be an unwelded region of the connection portion 31 or an unwelded region of the electrode tab set 11). The unwelded region is relatively flat, and the separator layer 51 is bonded to the unwelded region, so that it is possible to improve the stability of the separator layer 51 and reduce a risk of detachment of the separator layer 51.

In some embodiments, the separator layer 51 completely covers the welding surface 41 so as to seal the metal particles between the welding surface 41 and the separator layer 51, reduce the risk of metal particles falling into the electrode unit 10 and improve safety.

In some embodiments, the separator assembly 50 includes a separator layer 51. Two separator layers 51 are provided between two adjacent welding portions 40, and the two separator layers 51 are attached to the two welding portions 40 respectively.

For example, one separator layer 51 covers a welding surface 41 of one welding portion 40, and the other separator layer 51 covers the a welding surface 41 of the other welding portion 40.

The two separator layers 51 can not only fix residual metal particles on the two welding portions 40, but also form a double-layer protective structure between the two welding portions 40, reducing the risk of friction between the two welding portions 40.

In some embodiments, the separator layer 51 may be a single-sided adhesive tape or a double-sided adhesive tape. For example, the separator layer 51 is a double-sided adhesive tape, and two separator layers 51 located between two welding portions 40 are bonded to each other.

In some embodiments, the plurality of connection portions 31 include a first connection portion 31a and a second connection portion 31b, and the plurality of electrode tab sets 11 include a first electrode tab set 11a and a second electrode tab set 11b. At least a part of the first electrode tab set 11a is located on a side of the first connection portion 31a away from the second connection portion 31b and is welded to the first connection portion 31a, and at least a part of the second electrode tab set 11b is located on a side of the second connection portion 31b away from the first connection portion 31a and is welded to the second connection portion 31b.

In some embodiments, the first connection portion 31a and the second connection portion 31b are connected to the same end of the current collection portion 32. Before welding, the first connection portion 31a is bent in the direction away from the second connection portion 31b, and the second connection portion 31b is bent in the direction away from the first connection portion 31a, so as to form a gap between the first connection portion 31a and the second connection portion 31b.

The welding apparatus can extend into the gap to weld the first electrode tab set 11a to the first connection portion 31a and weld the second electrode tab set 11b to the second connection portion 31b. After welding is completed, the first connection portion 31a and the second connection portion 31b approach each other to gather the first electrode tab set 11a and the second electrode tab set 11b together.

By stacking the first electrode tab set 11a onto the side of the first connection portion 31a away from the second connection portion 31b, it is possible to avoid an interference between the current collection portion 32 and the first electrode tab set 11a, thereby reducing the requirement for the size of the first connection portion 31a. By stacking the second electrode tab set 11b onto the side of the second connection portion 31b away from the first connection portion 31a, it is possible to avoid an interference between the current collection portion 32 and the second electrode tab set 11b, thereby reducing the requirement for the size of the second connection portion 31b.

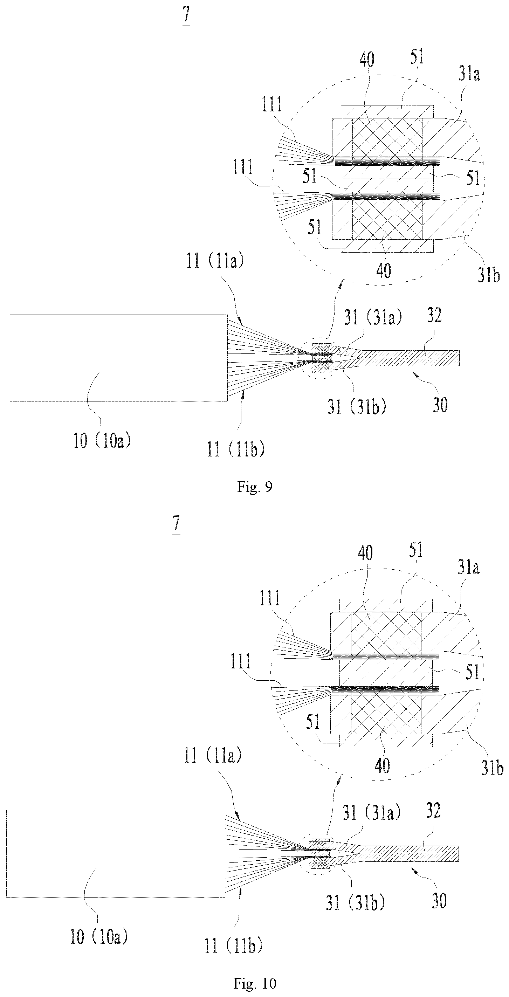

Fig. 9 is a schematic structural view of a battery cell provided by some further embodiments of the application, in which the housing is omitted.

As shown in Fig. 9, in some embodiments, the plurality of connection portions 31 include a first connection portion 31a and a second connection portion 31b, and the plurality of electrode tab sets 11 include a first electrode tab set 11a and a second electrode tab set 11b; at least a part of the first electrode tab set 11a is located between the first connection portion 31a and the second connection portion 31b and is welded to the first connection portion 31a, and at least a part of the second electrode tab set 11b is located between the first electrode tab set 11a and the second connection portion 31b and is welded to the second connection portion 31b.

In the embodiments of the application, the first connection portion 31a and the second connection portion 31b can protect at least a part of the first electrode tab set 11a and at least a part of the second electrode tab set 11b from two sides, so as to reduce a risk of damaging the electrode tabs 111.

In some embodiments, the first connection portion 31a and the second connection portion 31b are connected to the same end of the current collection portion 32. Before welding, the first connection portion 31a is bent in the direction away from the second connection portion 31b, and the second connection portion 31b is bent in the direction away from the first connection portion 31a, so as to form a gap between the first connection portion 31a and the second connection portion 31b.

The first electrode tab set 11a and the second electrode tab set 11b may extend into the gap and be welded to the first connection portion 31a and the second connection portion 31b respectively. After welding is completed, the first connection portion 31a and the second connection portion 31b approach each other to gather the first electrode tab set 11a and the second electrode tab set 11b together.

Fig. 10 is a schematic structural view of a battery cell provided by some further embodiments of the application, in which the housing is omitted.

As shown in Fig. 10, in some embodiments, the separator assembly 50 includes a separator layer 51. One separator layer 51 is provided between two adjacent welding portions 40, and two surfaces of the separator layer 51 are attached to the two welding portions 40 respectively.

The separator layer 51 can not only fix residual metal particles on the two welding portions 40, but also connect the two welding portions 40, so as to reduce a relative displacement of the two welding portions 40 and reduce the risk of friction between the two welding portions 40. The separator layer 51 connects the plurality of electrode tab sets 11 and the plurality of connection portion 31 together, thereby improving the overall strength of the plurality of electrode tab sets 11 and reducing a risk of the electrode tab 111 breaking.

In some embodiments, the separator layer 51 may be formed by coating a colloid.

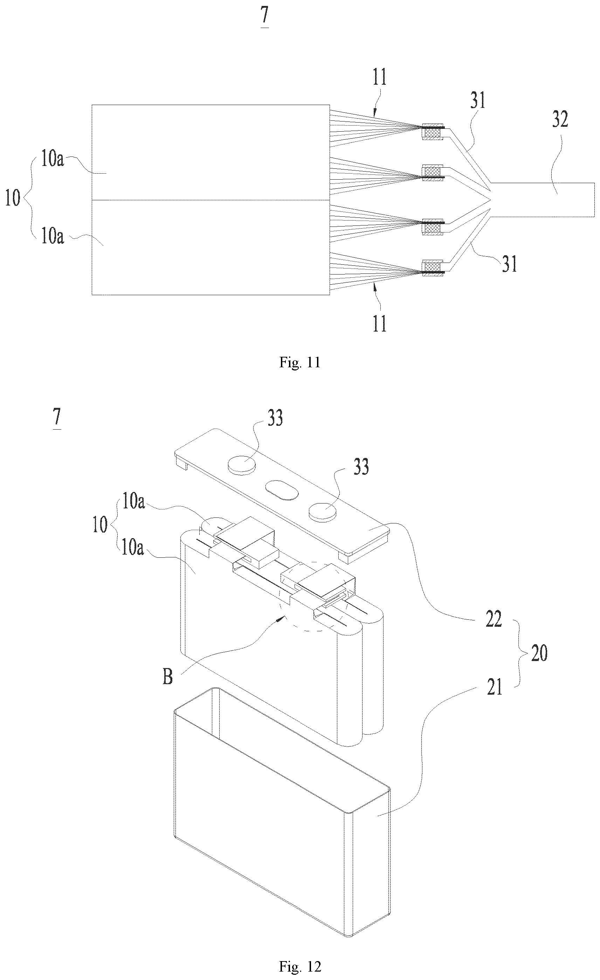

Fig. 11 is a schematic structural view of a battery cell provided by some further embodiments of the application, in which the housing 20 is omitted.

As shown in Fig. 11, in some embodiments, the electrode unit includes a plurality of electrode assemblies 10a, and each of the electrode assemblies 10a includes at least one electrode tab set 11.

A certain electrode tab 111 in an electrode assembly 10a may not necessarily form a electrode tab set 11 with the remaining electrode tabs 111 in its own electrode assembly 10a, but may also form an electrode tab set 11 with an electrode tab 111 in other electrode assemblies 10a. For example, a part of the electrode tabs 111 of one electrode assembly 10a may form a electrode tab set 11 with a part of the electrode tabs 111 of another electrode assembly 10a.

In the embodiments of the application, by providing a plurality of electrode assemblies 10a in the battery cell 7, the capacity of the battery cell 7 can be increased. In the embodiments the electrode tabs 111 of a plurality of electrode assemblies 10a are connected in groups, so as not to cause welding defects due to excessive laye amount of the electrode tabs 111.

In some embodiments, the amount of the connection portions 31 of the electrode lead member 30 may also be 4. Of course, the amount of the connection portions 31 of the electrode lead member 30 may also be 3, 5, or more.

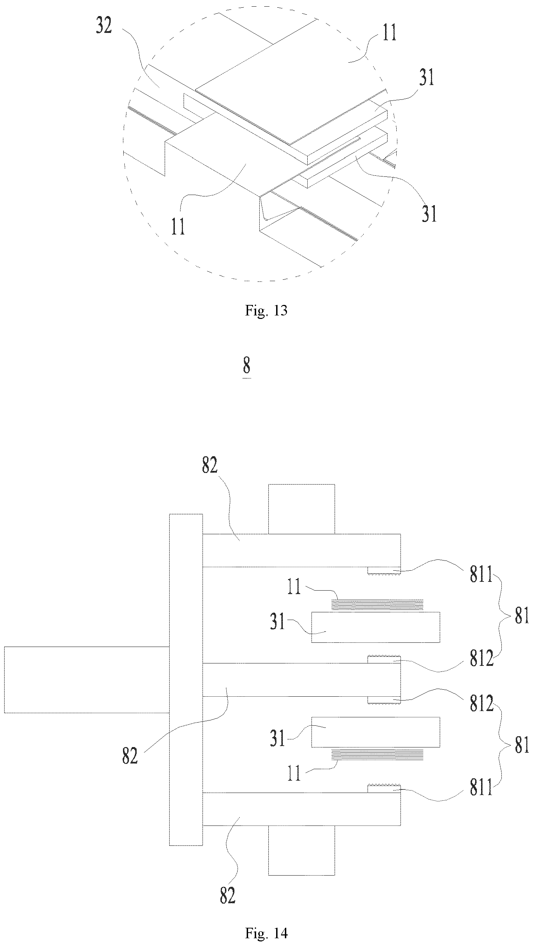

Fig. 12 is a schematic explosive view of a battery cell provided by some further embodiments of the application, and Fig. 13 is a schematic enlarged view at the circle B of Fig. 12.

As shown in Figs. 12 and 13, the electrode lead member 30 further includes an electrode terminal 33 arranged on the housing 20, and the electrode terminal 33 is exposed to an outside of the housing 20. The current collection portion 32 is connected to the electrode terminal 33.

The current collection portion 32 may be connected to the electrode terminal 33 by bonding, welding, riveting, or other means.

The electrode terminal 33 is exposed to the outside of the housing 20 to facilitate connection to a component outside the housing 20 (for example, a bus bar member), so that the electrode unit 10 is electrically connected to an external circuit through the current collection portion 32 and the connection portion 31 to enable charging and discharging of the electrode unit 10.

In some embodiments, the housing 20 includes a housing body 21 and an end cap 22, the housing body 21 has an opening, and the end cap 22 is used to cap the opening.

The housing body 21 and the end cap 22 are enclosed to form an accommodation chamber.

The housing body 21 may be of various shapes such as a rectangular prism, a cylinder and a hexagonal prism and be of various dimensions. Specifically, the shape of the housing body 21 may be determined according to a specific shape and size of the electrode unit 10. The housing body 21 may be of various materials, such as copper, iron, aluminum, stainless steel, aluminum alloy, plastic and the like, on which the embodiments of the application make no specific limitations.

Without limits, a shape of the end cap 22 may be adapted to a shape of the housing body 21 so as to fit the housing body 21. Optionally, the end cap 22 may be made of a material with a certain hardness and strength (such as aluminum alloy), so that the end cap 22 is less prone to deformation when subjected to compression and collision, enabling the battery cell 7 to have a higher structural strength and an improved safety performance. The end cap 22 is connected to the housing body 21 by welding, bonding, clamping, or other means.

The housing body 21 may be of a structure with one side open, and the amount of the end cap 22 is one and the end cap 22 is capped to the opening of the housing body 21. Alternatively, the housing body 21 may also be of a structure with two side open, the amount of the end caps 22 is set as two, and the two end caps 22 are capped to the two openings of the housing body 21 respectively.

In some embodiments, the electrode terminal 33 is mounted to the end cap 22.

In some embodiments, the battery cell 7 is a cylindrical battery cell. For example, the housing 20 of the battery cell 7 is cylindrical.

In some embodiments, the battery cell 7 is a rectangular battery cell. For example, the housing 20 of the battery cell 7 is rectangular.

According to some embodiments of the application, the application further provides a battery including a plurality of battery cells according to any of the above embodiments.

According to some embodiments of the application, the application further provides an electric device including the battery cell according to any of the above embodiments used to provide electrical energy. The electric device may be any apparatus or system employing the battery cell described above.

Fig. 14 is a schematic structural view of a welding apparatus provided by some embodiments of the application.

As shown in Fig. 14, the embodiments of the application provide a welding apparatus 8 for welding a plurality of electrode tab sets 11 of an electrode unit 10 to a plurality of connection portions 31 of an electrode lead member 30, and a plurality of electrode tab sets 11 welded to the plurality of connection portions 31 of the electrode lead member 30 have a same polarity. The welding apparatus 8 includes a plurality of welding assemblies 81, and each of the welding assemblies 81 is used to weld the connection portion 31 to at least one electrode tab set 11.

In the embodiments of the application, by providing a plurality of welding assemblies 81, a layer amount of the electrode tabs 111 to be welded by each welding assembly 81 can be reduced, thereby reducing the difficulty of welding between the connection portion 31 and the electrode tab 111, improving the connection strength between the connection portion and the respective electrode tab, reducing welding power and shortening welding duration, reducing a risk of the electrode tab 111 cracking and cold joints, and improving the current conveyance capacity and safety performance of the battery cell 7. The plurality of welding assemblies 81 of the embodiments of the application may weld synchronously to improve welding efficiency.

In some embodiments, each of the welding assemblies 81 includes a first welding component 811 and a second welding component 812 arranged opposite to each other. The welding apparatus 8 further includes at least three mounting plates 82 arranged in sequence at intervals, and any two adjacent mounting plates 82 are configured to be capable of approaching or moving away from each other. In any two adjacent mounting plates 82, a side of one mounting plate 82 facing towards the other mounting plate 82 is fixed with the first welding component 811, and a side of the other mounting plate 82 facing towards the one mounting plate 82 is fixed with the second welding component 812.

The first welding component 811 and the second welding component 812 can clamp the connection portion 31 and the respective electrode tab set 11 from two sides so as to weld the connection portion 31 to the respective electrode tab set 11.

In two adjacent mounting plates 82, it may be the case that one is arranged in a fixed way and the other is arranged in a movable way. Alternatively, in two adjacent mounting plates 82, both of the mounting plates 82 may be arranged in a movable way.

Two mounting plates 82 may move away from each other to increase the distance between the first welding component 811 and the second welding component 812; then, the connection portion 31 and the electrode tab set 11 can extend between the first welding component 811 and the second welding component 812; then the two mounting plates 82 can approach each other, and the first welding component 811 and the second welding component 812 squeeze from two sides and weld the connection portion 31 and the electrode tab set 11; finally, the two mounting plates 82 may move away from each other, and the first welding component 811 and the second welding component 812 are detached from the connection portion 31 and the electrode tab set 11.

By providing the plurality of mounting plates 82, the relative movement of the first welding component811 and the second welding component 812 of the plurality of mounting plates 82 can be achieved simultaneously, thereby synchronously welding a plurality of connection portions 31 and a plurality of electrode tab sets 11, improving welding efficiency.

In some embodiments, the first welding component 811 is a welding head, and the second welding component 812 is a welding seat.

In some embodiments, the amount of the mounting plates 82 is three. For example, the middle mounting plate 82 may be arranged in a fixed way, and the mounting plates 82 on two sides may be arranged in a movable way.

As shown in Figs. 4-8, the battery cell 7 according to the embodiments of the application includes a housing 20, an electrode assembly 10a and an electrode lead member 30. The electrode assembly 10a is accommodated within the housing 20 and includes a first electrode tab set 11a and a second electrode tab set 11b arranged in a stacked way. Each of the first electrode tab set 11a and the second electrode tab set 11b includes a plurality of electrode tabs 111 arranged in a stacked way.

The electrode lead member 30 includes a first connection portion 31a, a second connection portion 31b and a current collection portion 32. The first connection portion 31a and the second connection portion 31b are connected to an end of the current collection portion 32 facing towards the electrode assembly 10a and arranged in a stacked way. An end of the current collection portion 32 away from the electrode assembly 10a extends to the outside of the housing 20.

At least a part of the first electrode tab set 11a is located on a side of the first connection portion 31a away from the second connection portion 31b and is welded to the first connection portion 31a, and at least a part of the second electrode tab set 11b is located on a side of the second connection portion 31b away from the first connection portion 31a and is welded to the second connection portion 31b.

It should be noted that, in the case of no contradiction, the embodiments in the application and the features in the embodiments may be combined with each other.

At last, it should be appreciated that the above embodiments are only used to illustrate the technical solutions of the application but not to limit the same. A person of ordinary skill in the art is to understand that it is still possible to modify the technical solutions described in the above embodiments or equivalently replace some of the technical features thereof while the modifications and replacements shall not render the substance of the corresponding technical solutions deviate from the spirit and scope of the technical solutions in the various embodiments of the application.

## Claims

1. A battery cell, comprising:
a housing;
an electrode unit accommodated in the housing and comprising a plurality of electrode tab sets arranged in a stacked way, each of the electrode tab sets comprising at least one electrode tab; and
an electrode lead member arranged at the housing and comprising a plurality of connection portions, each of the connection portions being welded to at least one of the electrode tab sets, a plurality of electrode tab sets welded to the plurality of connection portions of the electrode lead member having a same polarity.

2. The battery cell according to claim 1, wherein an amount of the electrode tab sets is the same as an amount of the connection portions, and each of the connection portions is welded to one of the electrode tab sets respectively.

3. The battery cell according to claim 1 or 2, wherein the plurality of connection portions comprise a first connection portion and a second connection portion, and the plurality of electrode tab sets comprise a first electrode tab set and a second electrode tab set;
at least a part of the first electrode tab set is located between the first connection portion and the second connection portion and is welded to the first connection portion, and at least a part of the second electrode tab set is located between the first electrode tab set and the second connection portion and is welded to the second connection portion; or at least a part of the first electrode tab set is located on a side of the first connection portion away from the second connection portion and is welded to the first connection portion, and at least a part of the second electrode tab set is located on a side of the second connection portion away from the first connection portion and is welded to the second connection portion.

4. The battery cell according to any of claims 1-3, wherein each of the connection portions is welded to the respective electrode tab set and form a welding portion;
the battery cell further comprises a separator assembly, and the separator assembly is used to separate adjacent welding portions.

5. The battery cell according to claim 4, wherein the separator assembly comprises a plurality of separator layers;
the plurality of connection portions are arranged in a stacked way; in a stacked direction of the plurality of connection portions, a welding portion comprises two welding surfaces arranged opposite to each other; each of the welding surfaces is attached with the separator layer.

6. The battery cell according to claim 5, wherein the separator layer completely covers the welding surface.

7. The battery cell according to claim 4, wherein
the separator assembly comprises a separator layer;
two separator layers are provided between two adjacent welding portions, and the two separator layers are attached to the two welding portions respectively.

8. The battery cell according to claim 4, wherein
the separator assembly comprises a separator layer;
one separator layer is provided between two adjacent welding portions, and two surfaces of the separator layer are attached to the two welding portions respectively.

9. The battery cell according to any of claims 1-8, wherein a thermal conductivity of the electrode tab is less than 50W/(m•°C).

10. The battery cell according to any of claims 1-9, wherein a melting point of the electrode tab is greater than or equal to 1000°C.

11. The battery cell according to any of claims 1-10, wherein a hardness of the electrode tab is greater than 80HV, and a tensile strength of the electrode tab is greater than 500MPa.

12. The battery cell according to any of claims 1-11, wherein the electrode tab is a steel foil, a copper foil, an aluminum foil, a titanium foil, a nickel foil, or a nickel iron alloy foil.

13. The battery cell according to any of claims 1-12, wherein the electrode lead member further comprises a current collection portion connected to the plurality of connection portions.

14. The battery cell according to claim 13, wherein the current collection portion and the plurality of connection portions are formed integrally.

15. The battery cell according to claim 13 or 14, wherein the current collection portion passes through the housing.

16. The battery cell according to claim 13 or 14, wherein the electrode lead member further comprises an electrode terminal arranged on the housing, and the electrode terminal is exposed to an outside of the housing;
the current collection portion is connected to the electrode terminal.

17. The battery cell according to any of claims 1-16, wherein the electrode unit comprises a plurality of electrode assemblies, and each of the electrode assemblies comprises at least one of the electrode tab sets.

18. The battery cell according to any of claims 1-16, wherein the electrode unit comprises at least one electrode assembly, and one electrode assembly comprises at least two of the electrode tab sets arranged in a stacked way and having a same polarity.

19. A battery, comprising the battery cell according to any of claims 1-18.

20. An electric device, comprising the battery cell according to any of claims 1-18 used to provide electrical energy.

21. A welding apparatus for welding a plurality of electrode tab sets of an electrode unit to a plurality of connection portions of an electrode lead member, a plurality of electrode tab sets welded to the plurality of connection portions of the electrode lead member having a same polarity;
the welding apparatus comprises a plurality of welding assemblies, and each of the welding assemblies is used to weld the connection portion to at least one of the electrode tab sets.

22. The welding apparatus according to claim 21, wherein each of the welding assemblies comprises a first welding component and a second welding component arranged opposite to each other;
the welding apparatus further comprises at least three mounting plates arranged in sequence at intervals, and any two adjacent mounting plates are configured to be capable of approaching or moving away from each other;
in any two adjacent mounting plates, a side of one mounting plate facing towards the other mounting plate is fixed with the first welding component, and a side of the other mounting plate facing towards the one mounting plate is fixed with the second welding component.
